# EUROPEAN PATENT SPECIFICATION

(11) **EP 1 852 930 B1**
(45) Date of publication and mention of the grant of the patent: **18.01.2012**
(21) Application number: 06714166.3
(22) Date of filing: 21.02.2006
(51) Int. Cl.: H01M 8/04, H01M 8/06

(54) **SOLID OXIDE TYPE FUEL CELL AND OPERATION METHOD THEREOF**
FESTOXID-BRENNSTOFFZELLE UND BETRIEBSVERFAHREN DAFÜR
PILE A COMBUSTIBLE DE TYPE A OXYDE SOLIDE ET SON PROCEDE DE FONCTIONNEMENT

(30) Priority: 22.02.2005 JP 2005045252; 13.04.2005 JP 2005115828; 02.11.2005 JP 2005319628; 21.02.2006 JP 2006043355
(43) Date of publication of application: 07.11.2007
(60) Divisional application: 09164506.9
(73) Proprietor: Mitsubishi Materials Corporation, Tokyo 100-0004 (JP); The Kansai Electric Power Co., Inc., Osaka-shi, Osaka 530-8270 (JP)
(72) Inventor: AKIKUSA, Jun c/o Central Research Institute Naka, Naka-shi, Ibaraki 3110102 (JP); CHITOSE, Norihisa c/o Central Research Institute Naka, Naka-shi, Ibaraki 3110102 (JP)
(74) Representative: Gillard, Richard Edward
(86) International application number: PCT/JP2006/303026
(87) International publication number: WO 2006/090685

(56) References cited:
- EP-A- 0 654 838
- JP-A- 2000 243 423
- JP-A- 2001 524 739
- JP-A- 2003 282 113
- JP-A- 2004 010 411
- JP-A- 2004 335 162
- JP-A- 2005 019 035
- JP-A- 2005 019 036
- JP-A- 2005 317 405
- US-A1- 2002 006 535
- US-A1- 2003 012 997
- US-A1- 2003 054 215
- US-A1- 2003 134 174
- US-A1- 2004 048 123

## Description

### Technical Field

The present invention relates to a solid oxide type fuel cell, and more particularly to an operating method of the fuel cell at the time of actuation.

### Background Art

The above solid oxide type fuel cells are under development as third generation fuel cells for power generation use, and at present three different types including cylindrical, monolithic and planar stacked types of such cells are known. Any of these solid oxide type fuel cells has a stacked structure in which a solid electrolyte layer consisting of an oxide ion conductor is sandwiched between an air electrode layer (cathode) and a fuel electrode layer (anode); in the case of the planar stacked type for instance, a plurality of power generating cells each consisting of such stacked structure and separators are alternately laid one over the other to form a stacked body and accommodated into a housing to constitute a module.

In a solid oxide type fuel cell, oxidant gas (oxygen) is supplied to the air electrode layer side and fuel gas (H₂, CO, CH₄ or the like) is supplied to the fuel electrode layer side as reactive gases. Porous layers are used as both the air electrode layer and the fuel electrode layer to enable the reactive gases to reach the interface with the solid electrolyte layer.

In the power generating cell, the oxygen supplied to the air electrode layer side passes pores in the air electrode layer and reaches the vicinities of the interface with the solid electrolyte layer, where it receives electrons from the air electrode layer to be ionized into oxide ions (O²⁻). These oxide ions diffusively move within the solid electrolyte layer toward the fuel electrode layer. The oxide ions having reached the vicinity of the interface with the fuel electrode layer react therein with fuel gas to generate reaction products (including H₂O and CO₂) and discharge electrons into the fuel electrode layer.
The electrons generated by such an electrode reaction can be taken out as electromotive force by an external load on a separate route.

Incidentally, when conventionally known fuel cells including such solid oxide type fuel cells are to be operated (caused to generate electricity), it is necessary to preheat the fuel cell stack (especially power generating cells) to the working temperature of each fuel cell. This is to activate the electrochemical reaction of the power generating cells (see Patent Document 1).

Conventionally, when a fuel cell stack is to be raised in temperature to prepare for the start of operation, a heating device such as an electric heater or a burner is arranged on the periphery of the fuel cell stack, and the stack surface is heated with radiant heat from the heating device. This preheating method using radiant heat, however, involves a problem that a long time is needed to raise the temperature and accordingly a long time (e.g. about eight hours) is taken before the power generating operation is started. Moreover, if the temperature is to be raised with an electric heater, power consumption is extremely high, inviting a problem of extra power consumption before power generation by the fuel cells starts.

Incidentally, in such fuel cells, the ambient atmosphere of the fuel electrode is kept in a reduction condition by supplying inert gas (e.g. nitrogen gas) containing a minute quantity of hydrogen to the power generating cells in the temperature rising/falling process at the time of actuation or shutdown; this process is known as purging (see Patent Document 2 for instance).
This is to prevent the fuel electrode from being oxidized by the oxygen remaining within the fuel cells in the high temperature state at the time of actuation/shutdown. Oxidization of the fuel electrode would extremely deteriorate the power generating performance.

Solid oxide type fuel cells in particular, because of their extremely high working temperature of 600 to 1000°C, are difficult to start or stop rapidly and take a long time to start or stop, resulting in the susceptibility of the fuel electrode to oxidation; especially in a seal-less structure having no gas leak-preventive seal in the outer circumferential part of power generating cells where external oxygen-containing gas can more easily flow into the cells, massive purging is required at the time of actuation or shutdown and, furthermore, the increase in the size of fuel cells entails a proportional increase in the quantity of nitrogen gas used.

Conventionally, purging is predominantly accomplished by providing dedicated gas cylinders separately, nitrogen gas and hydrogen for the purging purpose are supplied from them to the fuel gas supply route, and this involves a problem that the whole fuel cell system, including the gas cylinders and the nitrogen gas supply route, is enlarged in size with a consequence of complicating the maintenance work.
Patent Document 1: Japanese Patent Laid-Open No. 8-162137
Patent Document 2: Japanese Patent Laid-Open No. 2-244559

US 2003/0054215 discloses a compact integrated solid oxide fuel cell power system which includes a fuel cell stack, two stages of heat exchange, and a thermal enclosure.

EP 0,654,838 discloses a device which comprises at least one battery, a first duct system, a surrounding casing for each battery, a second and third duct system, a secondary combustion space and at least one pre-reformer and a method of starting the device.

US 2003/0012997 discloses an electrochemical converter which is disposed within a pressure vessel that collects hot exhaust gases generated by the converter for delivery to a cogeneration bottoming device, such as a gas turbine.

US 2004/0048123 discloses a solid-oxide fuel cell system, wherein the fuel cell stacks, the fuel reformer, tail gas combuster, heat exchangers, and fuel/air manifold, are contained in a "hot zone" within a thermal enclosure. A separate and larger structural enclosure surrounds the thermal enclosure, defining a "cool zone" outside the thermal enclosure for incorporation of "cool" components such as the air supply system and the electronic control system.

US 2003/0134174 discloses a fuel cell module and a structure for gas supply to fuel cell. A conductive and tabular separator is inserted into the gap between the fuel electrode layer of an i-th power generating cell and the oxidiser electrode layer of an (i+1)-th power generating cell adjacent to the fuel electrode layer.

US 2002/0006535 discloses an integrated power module for generating thermal and electrical power which is provided within a housing which includes inlets for fuel and for air, a reformer chamber, a fuel cell stack, and a combustion chamber.

### Disclosure of the Invention

The object of the present invention is to provide a solid oxide type fuel cell in which reductive reformed gas containing hydrogen is generated from the initial stage of actuation by heating a reformer and a water vapor generator in the fuel module with a heating device at the time of actuation, and is enabled to be actuated rapidly while being supplied with this purge gas on the fuel electrode side of the power generating cell and an operating method of this fuel cell, and further to utilize this operating method to totally dispense with nitrogen conventionally needed for preventing the fuel electrode from being oxidized.

### [Mode for Implementing the Invention]

In order to achieve the object of the present invention stated above, a solid oxide type fuel cell in a mode for implementing the invention is a solid oxide type fuel cell wherein a fuel cell assembly is formed by aggregating a plurality of power generating cells and accommodating the assembly into a housing and a power generating reaction is generated by supplying reformed gas into the fuel cell assembly during operation, characterized in that a reformer and a water vapor generator are installed in the housing and heating devices for heating the reformer and the water vapor generator, wherein said heating devices are fitted within each of the reformer and the water vapor generator for heating the reformer and the water vapor generator from inside.
The meaning of the fuel cell assembly in this context includes a fuel cell stack in which a plurality of power generating cells and separators are alternately laid one over the other like a planar stacked type fuel cell or a plurality of power generating cells are aggregated and connected via connecting members (interconnectors) into a bundle, like cylindrical fuel cells.

An electric heater or a combustive burner, for instance, can be used as the heating device.

Also, it is desirable to arrange on the periphery of the fuel cell assembly a combustion catalyst for burning reformed gas discharged from the fuel cell assembly or a heater for igniting reformed gas.

As the solid oxide type fuel cell, it is possible to use a solid oxide type fuel cell of seal-less structure wherein the residual gas not used in the power generating reaction is burned outside the fuel cell assembly.

An operating method of the solid oxide type fuel cell in the mode for implementing the invention is an operating method of the solid oxide type fuel cell in which a fuel cell assembly is formed by aggregating a plurality of power generating cells and accommodating the assembly into a housing and a power generating reaction is generated by supplying reformed gas into the fuel cell assembly during operation, characterized in that a reformer, a water vapor generator and a heating device are provided; the reformer and the water vapor generator are heated with the heating devices at the time of actuating the fuel cell; fuel gas and water vapor from the water vapor generator are supplied to the reformer which has been heated to generate reformed gas whose main component is hydrogen; and the reformed gas is supplied to the fuel cell assembly to raise the temperature of the fuel cell assembly while keeping the fuel electrode of the power generating cell in a reduction condition.

It is desirable in the operating method of the solid oxide type fuel cell for the reformed gas whose main component is hydrogen supplied to the fuel cell assembly to be discharged from the fuel cell assembly and burned to raise the temperature of the fuel cell assembly.

According to the mode for implementing the invention, as a reformer and a water vapor generator equipped with a heating device are installed in a housing into which a fuel cell assembly is accommodated and these reformer and water vapor generator are heated with the heating device when the fuel cell is actuated, it is made possible to supply the reformed gas whose main component is hydrogen into the fuel cell assembly from immediately after the actuation and to keep the fuel electrode side of the power generating cell in a reduction condition without having to use nitrogen gas. Furthermore, as the fuel cell assembly can be heated in a short period of time by burning the residual reformed gas in the vicinity of the fuel cell assembly, the fuel cell is enabled to be rapidly actuated.
Moreover, once the combusting reaction is started, as the reformer and the water vapor generator are heated by that combustion heat, heating with the heating device as at the time of actuation is no longer necessary. This enables power consumption by an electric heater, for instance, used as the heating device, to be significantly reduced.

### Brief Description of the Drawings

Figure 1 is a diagram showing the schematic internal configuration of a solid oxide type fuel cell in the mode for implementation to which the invention is applied;
Figure 2 is a diagram showing gas flows in the fuel cell stack during operation;
Figure 3 is a diagram showing a state of installation of the heating device relative to the reformer and the water vapor generator;

### Description of Symbols

- 1: Fuel cell assembly (fuel cell stack)
- 5: Power generating cell
- 8: Separator
- 20: Housing
- 21: Reformer
- 22: Water vapor generator
- 23: Combustion catalyst
- 24: Heating device (electric heater, combustion burner)

### Best Mode for Carrying Out the Invention

### [Embodiment]

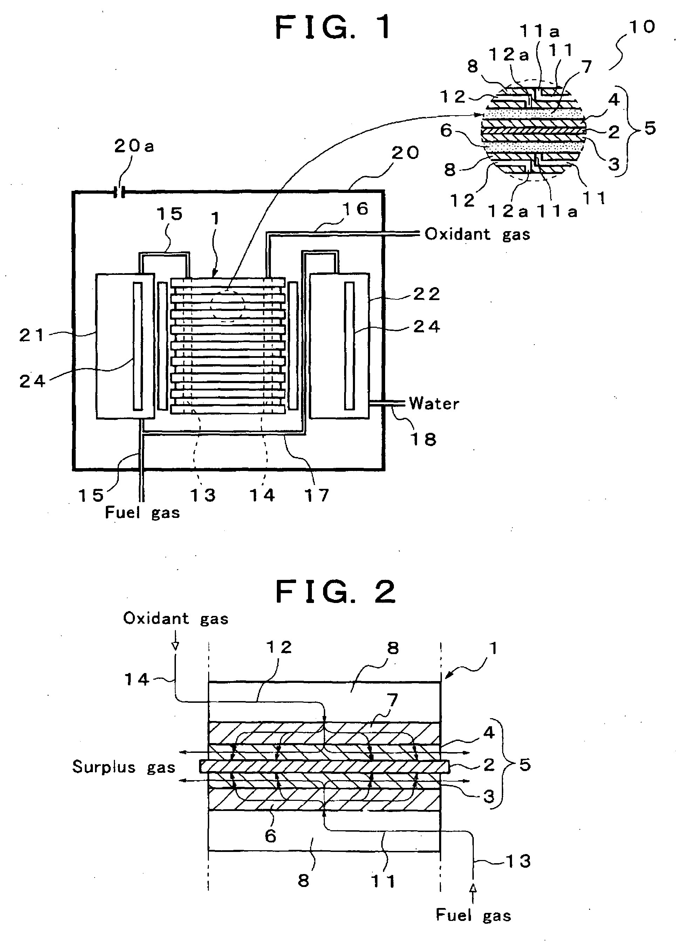

This embodiment corresponds to the mode for implementing the invention.
The embodiment of the invention will be described below with reference to Figure 1 through Figure 3.

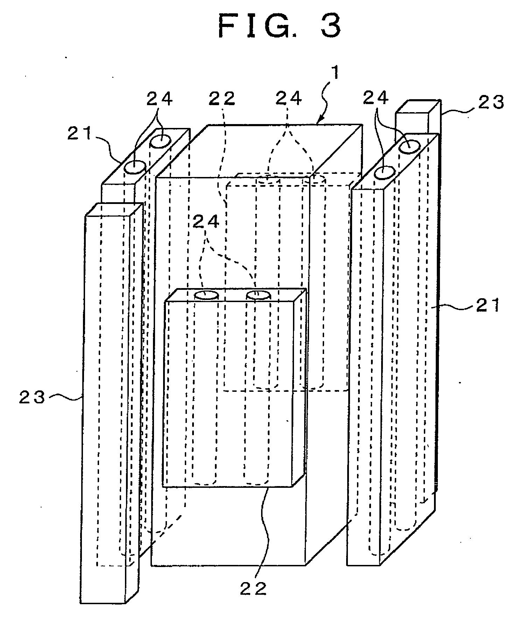

Figure 1 shows the schematic internal configuration of a solid oxide type fuel cell to which the invention is applied; Figure 2, gas flows in the fuel cell stack during operation; and Figure 3 shows a state: of installation of a heating device relative to a reformer and a water vapor generator.

As shown in Figure 1, the solid oxide type fuel cell (fuel cell module) of this embodiment has a housing 20 (drum) on whose internal wall an insulator (not shown) for heat retaining is arranged, a fuel cell stack 1 which causes a power generating reaction to occur is arranged at the center of this housing 20, and a reformer 21, a. water vapor generator 22 and so forth are arranged on the periphery of this fuel cell stack 1.

The reformer 21, packed inside with a Ni (nickel)-based or Ru (ruthenium)-based reforming catalyst for use with hydrocarbon, can reform hydrocarbon fuel gas supplied from outside into fuel gas mainly consisting of hydrogen.
The water vapor generator 22 is a heat exchanger for obtaining high temperature water vapor required for the reforming reaction, is arranged in a position opposing the central part of the fuel cell stack as shown in Figure 3 for instance so that it can absorb more of exhaust heat from the fuel cell stack 1, and guides high temperature water vapor to the reformer 21 via a water vapor guide pipe 17.

The fuel cell stack 1 is configured by stacking in the longitudinal direction a large number of unit cells 10 each configured of power generating cells 5 on both faces of whose solid electrolyte layer 2 a fuel electrode layer 3 and an air electrode layer 4 are arranged, a fuel electrode current collector 6 arranged outside the fuel electrode layer 3, an air electrode current collector 7 arranged outside the air electrode layer 4 and separators 8 arranged outside the current collectors 6 and 7.

In the unit cells 10 structured as described above, the solid electrolyte layer 2 is configured of yttria-stabilized zirconia (YSZ) or the like; the fuel electrode layer 3, of a metal such as Ni or Co or a cermet such as Ni-YSZ, Co-YSZ; the air electrode layer 4, of LaMnO₃, LaCoO₃ or the like; the fuel electrode current collector 6, of a spongy porous sintered metal plate of Ni-based alloy or the like; the air electrode current collector 7, of a spongy porous sintered metal plate of Ag-based alloy or the like; and the separators 8, of stainless steel or the like.

The separators 8 have a function to electrically connect the power generating cells 5 to one another and to supply reactive gas to the power generating cells 5; they have fuel gas passages 11 which let in fuel gas (reformed gas) from the outer circumferential faces of the separators 8 and discharge it from the substantially central parts 11a of the faces of the separators 8 opposite the fuel electrode current collector 6 and oxidant gas passages 12 which let in oxidant gas from the outer circumferential faces of the separators 8 and discharge it from substantially the centers 12a of the faces of the separators 8 opposite the air electrode current collector 7.

Within the fuel cell stack 1 a fuel gas manifold 13 and an oxidant gas manifold 14 extending in the stacking direction are formed as shown in Figure 1; a fuel gas guide pipe 15 from the reformer 21 is connected to the fuel gas manifold 13, and an oxidant gas guide pipe 16 guided from outside is connected to the oxidant gas manifold 14.

This solid oxide type fuel cell is formed in a seal-less structure having no anti-gas leak seal on the outer circumferential part of the power generating cells 5; when in operation, as shown in Figure 2, fuel gas (reformed gas) and oxidant gas (air) supplied from the substantially central parts of the separators 8 to the power generating cells 5 through the fuel gas passages 11 and the oxidant gas passages 12 are distributed evenly all over the fuel electrode layer 3 and the air electrode layer 4 while being diffused in the outer circumferential direction of the power generating cells 5 to cause a power generating reaction to take place, and surplus gas (exhaust gas) not consumed in power generating reaction is freely discharged from the outer circumferential part of the power generating cells 5 within the housing 20. An exhaust port 20a for discharging the exhaust gas within the housing to the outside of the housing is provided in the top part of the housing 20.

Incidentally in this embodiment, heating devices 24 are provided for the reformers 21 and the water vapor generators 22 so that the reformers 21 and the water vapor generators 22 can be heated by thermal conduction. Electric heaters or combustion burners are used as the heating devices 24.

Figure 3 show how the heating devices 24 are fitted where electric heaters are used as the heating devices 24.
Figure 3 shows a case in which pipe-shaped heaters are used; a plurality (two) of such heaters are arranged within each of the reformers 21 and each of the water vapor generators 22 in the longitudinal direction, and heat the reformers 21 and the water vapor generators 22 from inside.
Incidentally, in the case illustrated in Figure 3, two reformers 21 and two water vapor generators 22 are provided respectively on the peripheries of the fuel cell stack 1 in pairs opposite each other with the fuel cell stack 1 in-between, and each of them is provided with a heating device 24.

In two positions near the fuel cell stack 1, combustion catalysts 23 are arranged in the stacking direction as combusting means for facilitating the combustion of surplus gas (reformed gas) discharged from the outer circumferential part of the fuel cell stack 1. As these combustion catalysts 23, for instance what uses thin plate-shaped honeycomb catalysts with Pt, Pd or the like carried by alumina carriers can be applied.
Further, though not shown, ignition heaters or igniters which ignite and burn discharged surplus gas, in place of the combustion catalysts 23, can be arranged in suitable positions near the fuel cell stack as surplus gas combusting means. Also, these combustion catalysts 23 and ignition heaters or igniters can be used in combination. Any of these combusting means are very effective in quickly igniting and burning reformed gas discharged from the fuel cell stack 1 and heating the whole stack efficiently and uniformly.

Next, the operating method of the solid oxide type fuel cells configured as described above will be described.

At the time as the actuation of the fuel cells, the heating devices 24 are operated, the reformers 21 and the water vapor generators 22 are heated and raised in temperature by thermal conduction, fuel gas (hydrocarbon fuel), oxidant gas (air) and water (having gone through heat exchange outside to become high temperature water) are supplied from outside into the fuel cell module respectively through the fuel gas guide pipe 15, the oxidant gas guide pipe 16 and a water supply pipe 18. As the reformers 21 and the water vapor generators 22 are heated by the heating devices 24 from
inside (in the case of Figure 3) by thermal conduction, the reformers 21 are raised to a sufficiently high temperature for reforming and the water vapor generators 22 begin to generate high temperature water vapor in only a few minutes.

Hydrocarbon-based fuel gas is joined and mixed in the fuel gas guide pipe 15 with high temperature water vapor guided by the water vapor guide pipe 17 from the water vapor generators 22 and guided into the reformers 21, and hydrocarbon-based fuel gas is reformed in the reformers 21 into fuel gas mainly consisting of hydrogen by the action of the reforming catalyst for use with hydrocarbon. This reforming reaction is an endothermic reaction, and the high temperature heat required for the reforming reaction (650 to 800°C) is obtained by receiving direct heat from the appended heating devices 24.

The reformed gas generated by the reformers 21 is guided to the fuel gas manifold 13 in the fuel cell stack 1 and introduced into the separators 8 through the manifold 13. Together with air introduced through the oxidant gas manifold 14, these reactive gases pass the inside of the separators 8 and flow to diffuse in the outer circumferential direction from the substantially central parts of the power generating cells 5. This reformed gas is reductive gas containing hydrogen, and keeps the fuel electrode side of the power generating cells 5 in a reduction condition.
Surplus gas mainly consisting of hydrogen, which is not used in the power generating reaction, is discharged out as it is from the outer circumferential part of the fuel cell stack 1, and promptly ignited and burned by the combusting means (combustion catalysts, ignition heaters or igniters).

In this way, according to the invention, reformed gas mainly consisting of hydrogen obtained by the reforming reaction can be supplied into the fuel cell stack from immediately after actuation, and moreover the fuel cell stack can be heated and raised in temperature in a short period of time by burning the reformed gas mainly consisting of hydrogen in the vicinity of the stack, thereby enabling the fuel cell to be rapidly actuated.
Incidentally, the time taken until the start of power generation (rated operation) can be reduced to three hours or less, much shorter than the usual eight hours. In addition, the introduction of nitrogen gas into the stack for preventing oxidation (nitrogen purge) conventionally required at the time of starting operation is made unnecessary, making the installation of a nitrogen gas cylinder or piping arrangement dispensable with a corresponding saving in cost.

Furthermore, once the combustion reaction is started, the nearby reformers 21 and water vapor generators 22 are heated by that combustion heat, and therefore the heating by the heating devices 24 used at the time of actuation becomes no longer necessary.
In this embodiment, the heating devices 24 need to be worked for only about 30 minutes after the start of operation. This results in a substantial reduction in power consumption compared with a case in which, for instance, electric heaters are used as the heating devices 24.

### Industrial Applicability

The present invention can provide a solid oxide type fuel cell in which reductive reformed gas containing hydrogen is generated from the initial stage of actuation by heating a reformer and a water vapor generator in the fuel module with a heating device at the time of actuation, and which is enabled to be actuated rapidly while being supplied with the purge gas on the fuel electrode side of the power generating cell together with an operating method of this fuel cell.

## Claims

1. A solid oxide type fuel cell wherein a fuel cell assembly is formed by aggregating a plurality of power generating cells and accommodating the assembly into a housing and a power generating reaction is generated by supplying reformed gas into said fuel cell assembly during operation, further comprising:
a reformer and a water vapor generator installed in said housing, and heating devices for heating said reformer and said water vapor generator, wherein said heating devices are fitted within each of said reformer and said water vapor generator for heating said reformer and said water vapor generator from inside.

2. The solid oxide type fuel cell according to Claim 1, wherein an electric heater or a combustion burner is used as said heating device.

3. The solid oxide type fuel cell according to Claim 1, wherein a combustion catalyst for burning reformed gas discharged from the fuel cell assembly or a heater for igniting reformed gas is arranged on the periphery of said fuel cell assembly.

4. The solid oxide type fuel cell according to Claim 1, wherein said solid oxide type fuel cell is a solid oxide type fuel cell of seal-less structure wherein the residual gas not used in the power generating reaction is burned outside the fuel cell assembly.

5. An operating method of the solid oxide type fuel cell according to claims 1 to 4, wherein:
said reformer and said water vapor generator are heated with said heating devices at the time of actuating the fuel cell;
fuel gas and water vapor from said water vapor generator are supplied to said reformer which has been heated to generate reformed gas whose main component is hydrogen; and
the reformed gas is supplied to said fuel cell assembly to raise the temperature of said fuel cell assembly while keeping the fuel electrode of said power generating cell in a reduction condition.

6. The operating method of the solid oxide type fuel cell according to Claim 5, wherein the reformed gas whose main component is hydrogen supplied to said fuel cell assembly is discharged from the fuel cell assembly and burned to raise the temperature of said fuel cell assembly.

## Patentansprüche

1. Festoxid-Brennstoffzelle, worin eine Anordnung von Brennstoffzellen durch Aggregation einer Vielzahl von Energie erzeugenden Zellen und Einbringung der Anordnung in ein Gehäuse gebildet und eine Energie erzeugende Reaktion durch Zuführen von reformiertem Gas in die Anordnung von Brennstoffzellen während des Betriebs erzeugt werden, weiterhin umfassend einen in dem Gehäuse installierten Reformer und einen Wasserdampfgenerator und Heizvorrichtungen zum Erhitzen des Reformers und des Wasserdampfgenerators, worin die Heizvorrichtungen innerhalb jeden Reformers und des Wasserdampfgenerators zum Erhitzen des Reformers und des Wasserdampfgenerators von innen eingebaut sind.

2. Festoxid-Brennstoffzelle nach Anspruch 1, worin ein elektrisches Heizgerät oder ein Verbrennung-Brenner als Heizvorrichtung verwendet wird.

3. Festoxid-Brennstoffzelle nach Anspruch 1, worin ein Verbrennungskatalysator zur Verbrennung reformierten, aus der Brennstoffzellen-Anordnung entladenen Gases oder ein Heizgerät zum Entzünden reformierten Gases am Umfang der Brennstoffzellen-Anordnung angebracht ist.

4. Festoxid-Brennstoffzelle nach Anspruch 1, worin die Festoxid-Brennstoffzelle eine Festoxid-Brennstoffzelle mit dichtungslosem Aufbau ist, worin das nicht bei der Energieerzeugungsreaktion verwendete Restgas außerhalb der Brennstoffzellen-Anordnung verbrannt wird.

5. Betriebsverfahren für die Festoxid-Brennstoffzelle nach Anspruch 1 bis 4, worin
der Reformer und der Wasserdampfgenerator mit dem Heizgerät zum Zeitpunkt der Ingangsetzung der Brennstoffzelle erhitzt werden, Brennstoffgas und Wasserdampf vom Wasserdampfgenerator dem Reformer zugeführt werden, der zur Erzeugung von reformiertem Gas, dessen Hauptkomponente Wasserstoff ist, erhitzt wurde, und
das reformierte Gas der Brennstoffzellen-Anordnung zur Erhöhung der Temperatur der Brennstoffzellen-Anordnung zugeführt wird, während die Brennstoffelektrode der Energie erzeugenden Zelle unter Reduktionsbedingung gehalten wird.

6. Betriebsverfahren der Festoxid-Brennstoffzelle nach Anspruch 5, worin das der Brennstoffzellen-Anordnung zugeführte reformierte Gas, dessen Hauptkomponente Wasserstoff ist, aus der Brennstoffzellen-Anordnung entladen und zur Temperaturerhöhung der Brennstoffzellen-Anordnung verbrannt wird.

## Revendications

1. Pile à combustible de type oxyde solide dans laquelle un assemblage de pile à combustible est formé par agrégation d'une pluralité de cellules produisant de l'électricité et logement de l'assemblage dans un boîtier et une réaction de production d'électricité est générée par alimentation d'un gaz reformé dans ledit assemblage de pile à combustible pendant le fonctionnement, comprenant en outre :
un reformeur et un générateur de vapeur d'eau placés dans ledit boîtier, et des dispositifs de chauffage pour chauffer ledit reformeur et ledit générateur de vapeur d'eau, lesdits dispositifs de chauffage étant placés dans chacun dudit reformeur et dudit générateur de vapeur d'eau pour chauffer ledit reformeur et ledit générateur de vapeur d'eau de l'intérieur.

2. Pile à combustible de type oxyde solide selon la revendication 1, dans laquelle un appareil de chauffage électrique ou un brûleur à combustion est utilisé en tant que ledit dispositif de chauffage.

3. Pile à combustible de type oxyde solide selon la revendication 1, dans laquelle un catalyseur de combustion pour brûler le gaz reformé libéré par l'assemblage de pile à combustible ou un appareil de chauffage pour enflammer le gaz reformé est placé à la périphérie dudit assemblage de pile à combustible.

4. Pile à combustible de type oxyde solide selon la revendication 1, ladite pile à combustible de type oxyde solide étant une pile à combustible de type oxyde solide de structure sans joint d'étanchéité dans laquelle le gaz résiduel qui n'est pas utilisé dans la réaction produisant de l'électricité est brûlé à l'extérieur de l'assemblage de pile à combustible.

5. Procédé de fonctionnement de la pile à combustible de type oxyde solide selon les revendications 1 à 4, dans lequel :
ledit reformeur et ledit générateur de vapeur d'eau sont chauffés avec lesdits dispositifs de chauffage au moment de la mise en marche de la pile à combustible ;
le gaz combustible et la vapeur d'eau provenant dudit générateur de vapeur d'eau sont introduits dans ledit reformeur qui a été chauffé pour produire un gaz reformé dont le composant principal est l'hydrogène ; et
le gaz reformé est introduit dans ledit assemblage de pile à combustible pour augmenter la température dudit assemblage de pile à combustible tout en maintenant l'électrode à combustible de ladite pile produisant de l'électricité dans des conditions de réduction.

6. Procédé de fonctionnement de la pile à combustible de type oxyde solide selon la revendication 5, dans lequel le gaz reformé dont le composant principal est l'hydrogène introduit dans ledit assemblage de pile à combustible est libéré de l'assemblage de pile à combustible et brûlé pour augmenter la température dudit assemblage de pile à combustible.
